# NEUE EUROPÄISCHE PATENTSCHRIFT

(11) **EP 0 242 665 B2**
(45) Veröffentlichungstag und Bekanntmachung des Hinweises auf die Entscheidung über den Einspruch: **21.09.1994**
(45) Hinweis auf die Patenterteilung: 14.08.1991
(21) Anmeldenummer: 87104954.0
(22) Anmeldetag: 03.04.1987
(51) Int. Cl.: B01D 19/00, C02F 1/20

(54) **Anordnung zum Austreiben leicht flüchtiger Verunreinigungen aus Flüssigkeiten**
Apparatus for the expulsion of light volatile pollutants from liquids
Dispositif pour chasser les souillures légèrement volatiles de liquides

(30) Priorität: 22.04.1986 DE 3613518; 28.07.1986 DE 3625488
(43) Veröffentlichungstag der Anmeldung: 28.10.1987
(73) Patentinhaber: IEG Industrie-Engineering GmbH, D-72770 Reutlingen (DE)
(72) Erfinder: Bernhardt, Bruno, D-7410 Reutlingen 11-Betzingen (DE)
(74) Vertreter: Möbus, Rudolf, Dipl.-Ing.

(56) Entgegenhaltungen:
- DE-A- 1 642 494
- DE-A- 1 911 199
- DE-A- 1 912 936
- DE-A- 1 952 287
- DE-A- 2 522 324
- FR-A- 1 563 106
- GB-A- 892 550
- US-A- 3 346 033
- US-A- 4 045 336
- US-A- 4 265 753
- US-A- 4 365 978

## Beschreibung

Die Erfindung betrifft eine Anordnung zum Austreiben leichtflüchtiger Verunreinigungen aus Flüssigkeiten mit Hilfe von Gasen, wobei die Gase durch Unterdruckbildung oberhalb des Flüssigkeitsspiegels durch eine unterhalb des Flüssigkeitsspiegels angeordnete Düsenplatte und durch die zu behandelnde Flüssigkeit hindurchgesaugt werden.

Es sind bereits verschiedene Anordnungen bekannt, um Flüssigkeiten mittels Gasen zu behandeln. Die hierbei verwendeten Anordnungen und Vorrichtungen sind aber konstruktiv sehr aufwendig und eignen sich dadurch nicht für einen breiten Anwendungsbereich, wie die Behandlung von Abwässern und verunreinigtem Grundwasser. So ist aus der US-A-4 045 336 eine Vorrichtung zur Reinigung und zur Erhöhung des Sauerstoffgehaltes von Wasser bekannt, bei welcher sauerstoffhaltige Luft oder Gase durch Siebwandungen eines Behälters in das den Behälter durchströmende Wasser eingedrückt werden, das gleichzeitig einer mechanischen Druckhehandlung unterzogen wird. Durch die US-A-4 365 978 ist bekannt, Stickstoffgas unter Druck in eine mit Salzlösung gefüllte Kaverne einzuleiten und dort durch gelochte Rohre durch die Salzlösung hindurch ausströmen zu lassen. Das Einbringen der Gase unter Druck erfordert aber nicht nur einen erheblichen Energieaufwand, sondern hat auch den Nachteil, daß sich die in der zu behandelnden Flüssigkeit bildenden Gasblasen durch die nach dem Einbringen in die Flüssigkeit auftretende Druckabnahme beim Durchgang durch die Flüssigkeit vergrößern und dadurch eine unerwünschte Schaumbildung in den Flüssigkeiten begünstigen.

Durch die DE-A-2 522 324 ist zwar bekannt, entsprechend dem Oberbegriff des Hauptanspruches die Gase durch eine Unterdruckbildung oberhalb des Flüssigkeitsspiegels durch die zu behandelnde Flüssigkeit in Bläschenform hindurchzusaugen. Bei dieser Anordnung wird jedoch der Unterdruck über einem Flüssigkeitsspiegel mit erheblichem Energieaufwand mittels einer Strahlpumpe erzeugt, innerhalb welcher in einer ersten Behandlungsstufe die zu behandelnde Flüssigkeit mit dem in einer zweiten Flüssigkeitsbehandlungsstufe durch diese Flüssigkeit hindurchgesaugten Gas innig vermischt wird. Eine solche Einrichtung ist zum Austreiben leichtflüchtiger Verunreinigungen aus Abwässern oder aus dem Grundwaser konstruktiv und vom Energieaufwand her viel zu aufwendig und zudem ungeeignet, weil bei einer ersten Gasbehandlung entfernte gasförmige Verunreinigungen in einer zweiten Behandlungsstufe wieder innig mit der zu behandelnden Flüssigkeit vermischt würden.

Der Erfindung liegt die Aufgabe zugrunde, eine Anordnung der eingangs genannten Art zu schaffen, die es erlaubt, sowohl mit einem geringen konstruktiven Aufwand als auch einem geringen Energieaufwand leichtflüchtige Verunreinigungen aus dem Grundwasser zu entfernen.

Die gestellte Aufgabe wird mit einer Anordnung der genannten Art erfindungsgemäß durch die im Hauptanspruch aufgeführten Merkmale gelöst.

Durch den Einsatz eines Ventilators zur Unterdruckbildung, der allein auf die Gase einwirkt und keine Flüssigkeitsförderung bewirken muß, wird bereits ein minimaler Energieaufwand zum Betrieb der gesamten Einrichtung gewährleistet. Ein zusätzlicher Druckerzeuger für das Gas ist nicht erforderlich. Durch die Möglichkeit, den Abstand des Gasaufnahmeraumes vom Flüssigkeitsspiegel zu ändern, was durch eine Verstellung des Gasaufnahmeraumes bewerkstelligt werden kann, lassen sich immer die günstigsten Gasdurchströmungsverhältnisse auch bei einem auf seine Leistung festgelegten Ventilator einstellen. Bei dem Einsatz der Anordnung zur Grundwasserreinigung kann einfach Außenluft als sogenannte Strippluft in den Luftaufnahmeraum nachgezogen werden, die beim Durchgang durch die Flüssigkeit in Form von Unterdruckbläschen in Kontakt mit den Verunreinigungen, insbesondere Chlorkohlenwasserstoffen, kommt, wobei an der Bläschenoberfläche neben der normalen Diffundierwirkung durch den Unterdruck noch eine Ansaugwirkung auftritt. Störkräfte, wie sie bei Anordnungen auftreten, wo die zu behandelnde Flüssigkeit stark bewegt wird, müssen bei der Anordnung nicht befürchtet werden. Im gesamten Verfahrensbereich ergeben sich keine Überdrücke durch Strömungs- oder Massendrücke, die den Verdampfungsdrücken in unerwünschter Weise entgegenwirken.

Zweckmäßig erstreckt sich der Gasaufnahmeraum über den vollen Querschnitt des Schachtes, wodurch im Reinigungsbereich die Flüssigkeit über ihre gesamte Flüssigkeitssäulenfläche von der Luft oder einem anderen Gas beeinflußt wird. Bei dem Aufhängen des Gasaufnahmeraumes an einem Schwimmer entfällt eine aufwendige Niveauregulierung in dem das zu reinigende Grundwasser enthaltenden Schacht. Durch den Schwimmer wird der Düsenkörper unabhängig vom Grundwasserstand im Schacht immer in einem gleichen und ebenfalls einstellbaren Abstand zum Flüssigkeitsspiegel gehalten.

Der Wirkungsgrad der Anordnung ist bei dem geringen Energieaufwand erstaunlich hoch und so groß, daß mit ihr aus verunreinigtem Grundwasser nicht nur Chlorkohlenwasserstoffe, sondern auch andere Kohlenwasserstoffe, Alkohole und Benzolgruppen entfernt werden können. Es hat sich gezeigt, daß die in den Düsenkörper nachgezogene Luft bei einem nach unten offenen Düsenkörper eine Umwälzbewegung der Flüssigkeit im unteren Behälter- oder Schachtteil auslöst, die für ein Aufsteigen der unteren Flüssigkeit in den Begasungsbereich der Anordnung sorgt. Durch eine Drosselung der Luftzuleitung kann zusätzlich eine fein abstimmbare Unterdruckerhöhung im System erzielt werden. Im Verfahren ist stets nur ein Unterdruckerzeuger (Ventilator) vom druckosen Einschluß der Luftblase oberhalb der Düsenplatte bis zur Entlüftung im Unterdruck, oberhalb der Wasserfläche, erforderlich.

In dem Schacht kann sich Grundwasser sammeln und wird erfahrungsgemäß durch den im Freiraum des Schachtes ausgebildeten Unterdruck verstärkt in den Schacht eingezogen. Gleichzeitig wird im vom Grundwasser freien Teil des Schachtes auch durch das den Schacht begrenzende Erdreich hindurch Luft in den Schacht eingezogen und gleichzeitig eine Reinigung des Erdreiches im Schachtbereich erzielt, wobei die Umgebung der Schachtöffnung weitflächig mittels einer luftundurchlässigen Folie abgedeckt wird.

Die durch den Ventilator abgesaugte Luft kann vorteilhafterweise zusammen mit einem Anteil Außenluft, in ein dem Ventilator vor- oder nachgeschaltetes Filter, zum Beispiel Aktivkohlefilter, geleitet werden, in welchem die ausgetriebenen flüchtigen Verunreinigungen ausgefiltert werden.

Nachfolgend wird ein Ausführungsbeispiel einer erfindungsgemäß ausgebildeten Anordnung anhand der beiliegenden schematischen Zeichnung näher erläutert.

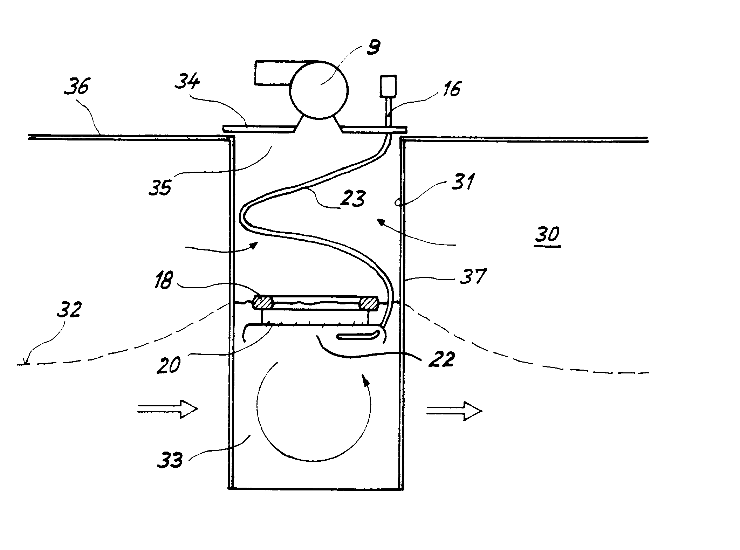

Die Zeichnung zeigt eine Anordnung zur Reinigung von Grundwasser. In der Nähe einer Verschmutzungsstelle wird in das Erdreich 30 ein Schacht 31 bis unter den mit einer gestrichelten Linie eingezeichneten Grundwasserspiegel 32 gebohrt. Der Schacht kann in bekannter Weise durch ein gelochtes Rohr 37 oder durch leicht montierbare Siebringe armiert sein. In das sich im Schacht 31 sammelnde Grundwasser 33 ist ein an einem Schwimmerring 18 hängender Düsenkörper in Form einer Düsenplatte 20 eingebracht, die nach unten aufgebogene Ränder aufweist, so daß unterhalb der Düsenplatte 20 ein Gasaufnahmeraum 22 gebildet ist. In den Gasaufnahmeraum 22 führt eine Schlauchleitung 23 von einem Luftansaugrohr 16, das durch einen die Schachtöffnung 35 verschließenden Deckel 34 hindurchgeführt ist. Auf dem Deckel 34 ist ein Ventilator 9 angeordnet, mit welchem die über die Schlauchleitung 23 zur Düsenplatte 20 geführte Außenluft durch das im Schacht gesammelte Grundwasser 33 hindurchgesaugt und aus dem Schacht abgezogen wird. Durch die Unterdruckbildung im Bohrschacht 31 ergibt sich eine verstärkte Zufuhr des Grundwassers in den Schachtbereich und dort eine Anhebung des Grundwasserspiegels 32. Gleichzeitig wird auch Luft aus dem den Bohrschacht 31 umgebenden Erdreich 30 in den Schacht eingesaugt und somit auch das Erdreich von flüchtigen Verunreinigungen gesäubert. Um die Säuberungswirkung des Erdreiches zu erhöhen, ist die Umgebung der Schachtöffnung 35 weitflächig mittels einer luftundurchlässigen Folie 36 abgedeckt.

## Patentansprüche

1. Anordnung zum Austreiben leichtflüchtiger Verunreinigungen aus Flüssigkeiten mit Hilfe von Gasen, wobei die Gase durch Unterdruckbildung oberhalb des Flüssigkeitsspiegels (32) durch eine unterhalb des Flüssigkeitsspiegels angeordnete Düsenplatte (20) und durch die zu behandelnde Flüssigkeit hindurchgesaugt werden, und daß die zu reinigende Flüssigkeit Grundwasser ist, das sich in einem in das Erdreich (30) eingebrachten Schacht (31) als Sammelraum befindet, der durch ein ins Erdreich (30) vertikal eingebrachtes Bohrloch gebildet ist, das mindestens teilweise durch ein gelochtes Rohr (37) oder Siebringe armiert ist und über dessen oberer Öffnung (35) ein Ventilator (9) zur Unterdruckbildung und zum Absaugen der über dem Flüssigkeitsspiegel (32) befindlichen Gase angeordnet ist, und daß der die Düsenplatte (20) aufweisende Gasaufnahmeraum (22) als ein an einem Schwimmer (18) hängender Düsenkörper mit parallel zum Flüssigkeitsspiegel (32) angeordneter Düsenplatte mit einstellbarem Abstand vom Flüssigkeitsspiegel (32) angeordnet und über eine Schlauchleitung (23) mit einem äußeren Gasraum verbunden ist.

2. Anordnung nach Anspruch 1, dadurch gekennzeichnet, daß die Behandlungsgase Außenluft sind.

3. Anordnung nach Anspruch 1 oder 2, dadurch gekennzeichnet, daß sich der Gasaufnahmeraum (22) über den vollen Querschnitt des Schachtes (31) erstreckt.

4. Anordnung nach einem der Ansprüche 1 bis 3, dadurch gekennzeichnet, daß die Umgebung der Schachtöffnung (35) weitflächig mittels einer luftundurchlässigen Folie (36) abgedeckt ist.

5. Anordnung nach einem der Ansprüche 1 bis 4, dadurch gekennzeichnet, daß auf der Einlaß-oder Auslaßseite des Ventilators (9) ein Filter angeordnet ist, durch welches das aus dem Schacht (31) abgesaugte Gas hindurchgeleitet wird.

6. Anordnung nach Anspruch 5, dadurch gekennzeichnet, daß in das Filter zusätzlich ein Anteil Außenluft eingeleitet wird.

7. Anordnung nach Anspruch 5 oder 6, dadurch gekennzeichnet, daß das Filter ein Aktivkohlefilter ist.

## Claims

1. Arrangement for expelling highly volatile impurities from liquids by means of gases, whereby the gases are drawn through a nozzle plate (20), which is arranged underneath the liquid level, and through the liquid to be treated, by way of establishing a reduced pressure above the liquid level (32), and that the liquid to be cleansed is ground water directed into a shaft (31) which is formed by a bore hole which has been vertically entered into the ground (30) and which is at least partially reinforced by a perforated pipe (37) or sieve rings and which comprises a top opening (35) with a ventilator (9) connected thereabove for establishing a reduced pressure and for drawing off gases located above the liquid level (32), and that the gas-accommodating space (22) which includes the nozzle plate (20) is arranged to be a nozzle body which is suspended on a float (18) and with the nozzle plate (20) arranged parallel and at an adjustable space from the liquid level (32) and connected via a hoseline (23) to an outer gas chamber.

2. Arrangement according to claim 1, characterised in that the treatment gases are ambient air.

3. Arrangement according to claim 1 or 2, characterised in that the gas-accommodating space (22) extends over the full cross-section of the shaft (31).

4. Arrangement according to one of claims 1 to 3, characterised in that the surround of the shaft opening (35) are covered over a wide surface by means of an air-proof foil (36).

5. Arrangement according to one of claims 1 to 4, characterised in that a filter is arranged at the inlet side or the outlet side of the ventilator (9), through which filter the gas drawn from the shaft (31) is ducted.

6. Arrangement according to claim 5, characterised in that a quantity of ambient air is additionally introduced into the filter.

7. Arrangement according to claim 5 or 6, characterised in that the filter is an active coal filter.

## Revendications

1. Dispositif pour chasser les souillures légèrement volatiles de liquides à l'aide de gaz, les gaz étant aspirés par formation d'une dépression au-dessus du niveau du liquide (32) à travers une plaque à buses (20) disposée au-dessous du niveau du liquide et à travers le liquide à traiter, le liquide à nettoyer est de l'eau souterraine et est conduit dans un puits (31) qui est formé par un trou de perçage logé verticalement dans la terre (30), qui est armé au moins partiellement par un tube perforé (37) ou par des bagues de tamisage et qui présente une ouverture supérieure (35) au-dessus de laquelle un ventilateur (9) est disposé pour formation de la dépression et pour aspiration des gaz se trouvant au-dessus du niveau du liquide (32), et le réceptacle des gaz (22) présentant la plaque à buses (20) est conçu comme un corps de buse suspendu à un flotteur (18) avec une plaque à buses (20) disposée parallèlement au niveau du liquide (32) et disposé à une distance réglable du niveau du liquide (32) et est relié par l'intermédiaire d'une conduite en tuyaux souples (23) à un espace de gaz extérieur.

2. Dispositif selon la revendication 1, caractérisé en ce que les gaz de traitement sont de l'air extérieur.

3. Dispositif selon la revendication 1 ou 2, caractérisé en ce que le réceptacle des gaz (22) s'étend sur toute la section du puits (31).

4. Dispositif selon l'une des revendications 1 à 3, caractérisé en ce que le voisinage de l'ouverture du puits (35) est recouvert sur une large surface par une feuille étanche à l'air (36).

5. Dispositif selon l'une des revendications 1 à 4, caractérisé en ce qu'un filtre est disposé du côté entrée ou du côté évacuation du ventilateur (9), à travers lequel est conduit le gaz aspiré hors du puits (31).

6. Dispositif selon la revendication 5, caractérisé en ce qu'une proportion d'air extérieur est introduite en plus dans le filtre.

7. Dispositif selon la revendication 5 ou 6, caractérisé en ce que le filtre est un filtre au charbon actif.
